Europäisches Patentamt

European Patent Office

Office européen des brevets

(19)

(11) Numéro de publication: **0 191 252**
**A1**

(12) # DEMANDE DE BREVET EUROPEEN

(21) Numéro de dépôt: 85400230.0

(22) Date de dépôt: 13.02.85

(51) Int. Cl.⁴: **A 01 N 25/12**

(43) Date de publication de la demande: **20.08.86**
**Bulletin 86/34**

(84) Etats contractants désignés: **BE DE GB IT NL**

(71) Demandeur: **Le Calvez, R., 1 rue du Clos de L'Ile, F-35760 St. Gregoire (FR)**
Demandeur: **Le Calvez, Marie-Marguerite, 1 rue du Clos de L'Ile, F-35760 St. Gregoire (FR)**

(72) Inventeur: **Le Calvez, R., 1 rue du Clos de L'Ile, F-35760 St. Gregoire (FR)**
Inventeur: **Le Calvez, Marie-Marguerite, 1 rue du Clos de L'Ile, F-35760 St. Gregoire (FR)**

(54) **Désherbant à base d'uracile et d'urée en microgranulés et procédé d'obtention.**

(57) Le désherbant sélectif est obtenu en introduisant la sepiolite dans un malaxeur, en l'arrosant abondamment d'eau en vue d'un mélange homogène, en pulvérisant sur ce mélange l'uracile et l'urée, en assurant la fixation de ces matières actives et leur incorporation de manière homogène.

Application du désherbant en post et pré-levée, au traitement des arbutes et application sur transplantations; pleine-terre, conteneurs et godets.

EP 0 191 252 A1

- 1 -

La présente invention concerne un procédé d'obtention d'un désherbant de post et pré-levée,sélectif,aux propriétés herbicides renforcées,constitué d'un mélange d'uracile et d'urée.

L'uracile additionné d'une urée est enrobé par un traitement à la sépiolite,afin d'obtenir une granulomètrie de 15-30,assurant la possibilité de dosages différents,rationnels,suivant les multiples usages,pour l'obtention de granulés utilisables sans eau.

La fabrication est réalisée de la façon suivante; mise en place de la sépiolite dans un malaxeur,ensuite,celle-ci est arrosée abondamment d'eau et,après l'obtention homogène d'un mélange,la matière active est pulvérisée et fixée sur le dit mélange,avec incorporation de manière homogène;

L'uracile est actif sur les mono- et dicotylèdones dans la proportion de 0,6% à 5%,en poids,de matières actives incorporées dans le produit fini.

L'urée est active dans la proportion de 0,9% à 4,5%,en poids.

Des conditions d'humidité du sol favorisent la pénétration de l'uracile et de l'urée,après enrobage à la sépiolite.

En cas de sècheresse,un arrosage après l'épandage est nécessaire.

Ces matières actives n'agissent qu'au contact des racines et n'ont aucune action foliaire.

La présente invention a pour objet le traitement des plants en place et des différents repiquages entrant dans les catégories suivantes;arbustes d'ornement,cônifères et feuillus.

Ce désherbant est particulièrement recommandé pour l'entretien des massifs, bordures d'ornements et des conteneurs pour cultures en pépinières.

Le traitement des conteneurs permet toutes les variantes de substrat, que ce soit; écorces compostées,tourbe brune,tourbe blonde,pouzzolane, terre végétale,terre de bruyère ou sable.

Quel que soit le dosage des matières actives contenues dans les variantes pré-citées,la sélectivité est toujours assurée.

L'action herbicide,ainsi que la rémanence,varient suivant les dosages et les natures de sol.

SENSIBILITE DES ADVENTICES (poucentage de destruction)

| ADVENTICES | NOMBRE D'ESSAIS | TEMOIN-POP/M2 (non traité) | URACILE + UREE |
|---|---|---|---|
| Anagallis arvensis | 1 | 60 | 96 |
| Cerastium vulgatum | 1 | 56 | 100 |
| Chenopodium album | 1 | 17 | 89 |
| Filago minima | 1 | 10 | 100 |
| Galeopsis tetrahit | 2 | 7 | 95 |
| Oenanthe sp | 1 | 21 | 100 |

| | | | |
|---|---|---|---|
| Poa pratensis | 1 | 68 | 100 |
| Polygonum aviculare | 1 | 47 | 100 |
| Polygonum persicaria | 1 | 11 | 100 |
| Rhinanthus glaber | 1 | 61 | 100 |
| Rumex acetosella | 3 | 9 | 87 |
| Senecio vulgaris | 1 | 20 | 90 |
| Sonchus arvensis | 1 | 28 | 100 |
| Spergula arvensis | 1 | 26 | 93 |
| Stellaria media | 1 | 8 | 64 |

Ce mélange d'uracile et d'urée est dégradé dans le sol par les micro-organismes.

Il n'a aucune influence néfaste sur la croissance des plants(aucune mortalité n'a été constatée).

Un surdosage de produit provoque des jaunissements fugaces,sans conséquen- sur la survie et la croissance des sujets traités.

Il s'emploie en application pré-levée pour nettoyage de terrains en vue de plantations.

Le produit est non sensible aux variantes de températures et peut s'emplo -yer toute l'année.

L'utilisation du produit permet aussi le traitement des rosiers,des mille -pertuis,des lierres et des bulbes; son spectre d'activité est très large. Pour réaliser une répartition uniforme du désherbant,l'usage d'un épandeur de micro-granulés,est conseillé.

Cet épandeur devra être muni de pelles orientables permettant de faire varier la largeur du traitement en fonction des espaces qui doivent recevoir le produit.

Le produit non toxique n'est classé à aucun tableau(A.B.C),et par suite, ne nécessite aucune mention"DANGEREUX" sur les emballages.

En ce qui concerne les proportions des matières actives incluses,uracile-urée,elle peuvent varier de 1/5 à 5/2,suivant les différentes sortes d'appli- et les micro-climats.

Différents phénomènes de synergie ont été constatés lors d'essais prati- ques à partir de tels granulés,renfermant l'uracile et l'urée,ces deux matières indépendamment,n'ayant pas ces actions.

Des résultats satisfaisants ont été obtenus avec cette formulation préparée sans élaborations techniques importantes.

- 3 -

Le désherbant de la présente invention s'applique également dans le dpmaine de la culture florale,aussi bien en culture hors sol qu'en serres. A titre d'exemple,des résultats intéressants ont été obtenus sur cultures de tulipes,d'oeillets,d'hortensia,d'iris,d'aster,de campanules et de glaï —euls.

Pour ce dernier type de culture,le dosage,est de préfèrence,celui préconisé pour la culture en godets.

En ce qui concerne les effets de synergie,le désherbant de l'invention s'est avéré efficace vis à vis des chiendents(agripum repens et cynodon dactylon)et des liserons en général(convolvulus),alors que,séparément, l'uracile ou l'urée,n'a aucune action sur ces espèces.

0191252

REVENDICATIONS

1°) Désherbant sélectif en pré et post-levée,contre les graminées et dicotylèdones,caractérisé par un mélange d'uracile,d'urée et d'enrobage de sépiolite
destiné aux transplantations,pleine-terre,godets et conteneurs.

2°) Désherbant selon la revendication 1 caractérisé en ce que l'uracile est
compris entre 0,6% et 5% et l'urée entre 0,9% et 4,5%(en poids).

3°) Désherbant suivant l'une quelconque des revendications précédentes sensé
en ce qui concerne les proportions de matières actives incluses uracile/urée
varient de 1/5 à 5/2 suivant les différentes natures de sol,les différentes
sortes d'applications et les micro-climats.

4°) Désherbant caractérisé par le fait qu'il est formulé en micro-granulés et
qu'il s'utilise sans eau.

5°) Application du produit selon les revendications précédentes,au traitement
des arbustes suivants;cônifères,feuillus,arbustes d'ornement et bulbes.

6°) Procédé d'obtention du désherbant sélectif selon l'une quelconque des
revendications précédentes,caractérisé en ce qu'il consiste à introduire
la sépiolite dans un malaxeur,à l'arroser abondamment d'eau en vue de l'obtention d'un mélange homogène,à pulvériser sur ce mélange l'uracile et l'urée,
en assurant la fixation de ces matières actives et leur incorporation de
manière homogène.

Office européen
des brevets

**RAPPORT DE RECHERCHE EUROPEENNE**

Numero de la demande

EP 85 40 0230

## DOCUMENTS CONSIDERES COMME PERTINENTS

| Catégorie | Citation du document avec indication. en cas de besoin. des parties pertinentes | Revendication concernee | CLASSEMENT DE LA DEMANDE (Int Cl 4) |
|---|---|---|---|
| Y | INDEX PHYTOSANITAIRE, 17ème édition, 1981, pages 269-280,306,345, ACTA, Paris, FR * Page 271: urées substituées; page 272: uraciles; pages 306,345: urée + uracile * | 1-6 | A 01 N 25/12 |
| Y | W. VAN VALKENBURG: "PESTICIDE FORMULATIONS", 1973, Marcel Dekker, New York, US; pages 145-147 * Page 147, table 1, I.B.1.a (2): sépiolite * | 1-6 | |
| A | FR-A-2 262 003 (DEPRO) * Page 3, ligne 31 - page 4, ligne 15 * | 1,6 | |
| A | FR-A-2 190 368 (CHEMISCHE FABRIK MARKTREDWITZ) * Page 1, lignes 1-16; page 2, lignes 13-18; page 3, lignes 33-40 * | 1,4,6 | DOMAINES TECHNIQUES RECHERCHES (Int. Cl.4) A 01 N |

Le présent rapport de recherche a été établi pour toutes les revendications

| Lieu de la recherche | Date d'achèvement de la recherche | Examinateur |
|---|---|---|
| LA HAYE | 08-10-1985 | DECORTE D. |